# EUROPEAN PATENT APPLICATION

(11) **EP 4 586 347 A1**
(43) Date of publication of application: **16.07.2025**
(21) Application number: 24216248.5
(22) Date of filing: 28.11.2024
(51) Int. Cl.: H01M 10/04, H01M 50/167, H01M 50/183, H01M 50/184, H01M 50/107

(54) **BATTERY CELL AND MANUFACTURING METHOD THEREOF**

(30) Priority: 09.01.2024 KR 20240003597
(71) Applicant: SAMSUNG SDI CO., LTD., Yongin-si, Gyeonggi-do 17084 (KR)
(72) Inventor: Cho, Sung Min, 16678 Suwon-si, Gyeonggi-do (KR)
(74) Representative: Gulde & Partner

(57) **Abstract**

A battery cell and a method of manufacturing the battery cell are disclosed. A battery cell includes an electrode assembly including a first electrode plate and a second electrode plate, a case in which the electrode assembly is accommodated, a cap assembly covering an open area of the case, and a gasket located between an upper portion of the electrode assembly and the cap assembly and located in close contact with the case.

## Description

### BACKGROUND

### 1. Technical Field

Aspects of embodiments of the present disclosure relate to a battery cell and a method of manufacturing the battery cell.

### 2. Description of the Related Art

In general, as demand for portable electronic products, such as notebook computers, video cameras, and portable phones" increases rapidly and commercialization of robots, electric vehicles, and the like begins in earnest, research on high-performance secondary batteries capable of repeated charging and discharging is actively conducted. In particular, since lithium secondary batteries have a high energy density and an operating voltage, excellent preservation and lifetime characteristics, the lithium secondary batteries are widely used as energy sources for various electronic products.

Among the lithium secondary batteries, a cylindrical secondary battery includes a cylindrical electrode assembly, a cylindrical case for accommodating the electrode assembly and electrolyte, and a cap assembly coupled to an opening of the case to seal the case and allowing a current generated from the electrode assembly to flow to an external device. The cylindrical secondary battery has a structure in which a case of a negative electrode and a cap assembly of a positive electrode are mutually insulated by a gasket.

The above-described information disclosed in the technology that forms the background of the present disclosure is only intended to improve understanding of the background of the present disclosure, and thus may include information that does not constitute the related art.

### SUMMARY OF THE INVENTION

According to an aspect of embodiments of the present disclosure, a battery cell and a method of manufacturing the battery cell is provided in which a capacity of a battery is increased by securing an internal space of a case. According to another aspect of embodiments of the present disclosure, a battery cell with an increased capacity and a method of manufacturing the battery cell with a short process time is provided by integrating an insulating plate with a gasket thereby omitting an additional insulating plate.

These and other aspects and features of the present disclosure will be described in or will be apparent from the following description of some embodiments of the present disclosure.

According to one or more embodiments, a battery cell includes an electrode assembly including a first electrode plate and a second electrode plate, a case in which the electrode assembly is accommodated, a cap assembly configured to cover an open area of the case, and a gasket disposed between an upper portion of the electrode assembly and the cap assembly and arranged in close contact with the case. The gasket may at least partially contact with the case.

The case may include a bottom portion having a circular shape, a side portion extending upward from the bottom portion, and a bending portion bent from the side portion to fix the gasket and the cap assembly.

The bending portion may include a beading portion bent inward from the side portion to support the cap assembly, and a crimping portion configured to restrict the cap assembly by an upper end portion of the side portion bent inward.

The gasket may include an airtightness maintenance part in close contact with an inner circumferential surface of an upper portion of the case to maintain airtightness, and an insulating part coupled to the airtightness maintenance part and located above the electrode assembly to prevent or substantially prevent a short circuit.

The airtightness maintenance part and the insulating part may be integrally formed.

The airtightness maintenance part and the insulating part may be bonded.

The insulating part may be located under the beading portion.

A diameter of the insulating part may be greater than an inner diameter of the beading portion.

The airtightness maintenance part may include an airtightness cylindrical portion having a cylindrical shape to be in close contact with an inner circumferential surface of the case, and an airtightness protruding portion protruding to an inner circumferential surface of the airtightness cylindrical portion.

The airtightness protruding portion may include a first protrusion protruding inward from a lower end portion of the airtightness cylindrical portion and coupled to the insulating part.

The airtightness protruding portion may further include a second protrusion disposed above the first protrusion and protruding inward from the airtightness cylindrical portion to support the cap assembly.

The insulating part may include an insulating plate connected to the airtightness maintenance part and configured to cover the upper portion of the electrode assembly, and an insulating through hole formed in the insulating plate and configured to allow a positive electrode tab connecting the electrode assembly to the cap assembly to pass therethrough.

The insulating part may further include an insulating discharge hole formed in the insulating plate to discharge a gas.

The battery cell may further include a guide part configured to correct a position of the gasket inserted into the case.

The guide part may include a guide protrusion protruding inward from the case, and a guide groove recessed outside the gasket and in which the guide protrusion is inserted.

According to one or more embodiments of the present disclosure, a method of manufacturing a battery cell includes an electrode input operation of putting an electrode assembly into a case, an upper portion input operation of putting a gasket into the case, a cap input operation of putting a cap assembly into the case, and a processing operation of sealing an opening of the case.

In the upper portion input operation, the gasket may be arranged between an upper portion of the electrode assembly and the cap assembly to prevent or substantially prevent a short circuit, and the gasket may be in close contact with the case to prevent or substantially prevent electrolyte leakage.

The upper portion input operation may include a first input operation of holding, by a transfer unit, the gasket to be located above the case, a second input operation of detecting, by a detection unit, a guide protrusion located on the case, a third input operation of correcting, by the transfer unit, a position of the gasket such that a guide groove in the gasket and the guide protrusion are positioned collinearly, and a fourth input operation of putting, by the transfer unit, the gasket into the case such that the guide protrusion is inserted into the guide groove.

The upper portion input operation may further include a fifth input operation of separating the transfer unit from the gasket when downward movement of the gasket is restricted by a guide stopper.

The processing operation may include a first processing operation of forming a beading portion bent inward from the case and the gasket to support the cap assembly, and a second processing operation of forming a crimping portion configured to restrict the cap assembly by bending upper end portions of the case and the gasket inward.

In the battery cell and the method of manufacturing the battery cell according to embodiments of the present disclosure, a gasket can simultaneously prevent or substantially prevent a short circuit and liquid leakage. Therefore, since a conventional upper insulating plate may be omitted, an internal capacity of a cell may be increased.

In the battery cell and the method of manufacturing the battery cell according to embodiments of the present disclosure, the gasket is inserted into a set case through a guide part, and it is thereby possible to prevent or substantially prevent an assembling failure and implement mass production.

According to another aspect of the present disclosure, a battery module and a battery pack manufactured using a battery with an improved structure, and a vehicle including the battery module and the battery pack may be provided.

However, aspects and effects obtainable through the present disclosure are not limited to the above aspects and effects, and other technical aspects and effects that are not mentioned will be clearly understood by those skilled in the art from the following description of the present disclosure.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not to be construed as being limited to the drawings:
FIG. 1 is a perspective view schematically illustrating a battery cell according to an embodiment of the present disclosure;
FIG. 2 is a cross-sectional view schematically illustrating the battery cell according to an embodiment of the present disclosure;
FIG. 3 is a cross-sectional view schematically illustrating a case according to an embodiment of the present disclosure;
FIG. 4 is a perspective view schematically illustrating a gasket according to an embodiment of the present disclosure;
FIG. 5 is a cross-sectional view schematically illustrating a state in which an airtightness maintenance part and an insulator are formed integrally according to an embodiment of the present disclosure;
FIG. 6 is a cross-sectional view schematically illustrating a state in which the airtightness maintenance part and the insulator are bonded according to ab embodiment of the present disclosure;
FIG. 7 is a view schematically illustrating the airtightness maintenance part according to an embodiment of the present disclosure;
FIG. 8 is a cross-sectional view schematically illustrating an airtightness protruding part according to one embodiment of the present disclosure;
FIG. 9 is a view schematically illustrating the insulator according to an embodiment of the present disclosure;
FIG. 10 is a cross-sectional view schematically illustrating a guide part according to an embodiment of the present disclosure;
FIG. 11 is a cross-sectional view schematically illustrating a guide stopper according to an embodiment of the present disclosure;
FIG. 12 is a cross-sectional view schematically illustrating a guide stopper according to another embodiment of the present disclosure;
FIG. 13 is a flowchart schematically illustrating a method of manufacturing a battery cell according to an embodiment of the present disclosure;
FIG. 14 is a flowchart schematically illustrating an upper portion input operation in FIG. 13;
FIG. 15 is a view schematically illustrating a first input operation in FIG. 14;
FIG. 16 is a view schematically illustrating a second input operation in FIG. 14;
FIG. 17 is a view schematically illustrating a third input operation in FIG. 14;
FIG. 18 is a view schematically illustrating a fourth input operation in FIG. 14;
FIG. 19 is a view schematically illustrating a fifth input operation in FIG. 14;
FIG. 20 is a flowchart schematically illustrating a processing operation in FIG. 13;
FIG. 21 is a view schematically illustrating a first processing operation in FIG. 20; and
FIG. 22 is a view schematically illustrating a second processing operation in FIG. 20.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted to have meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

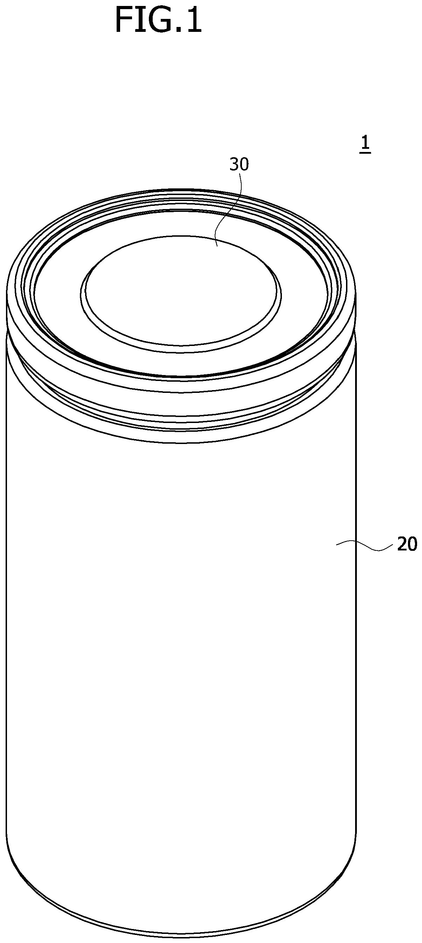

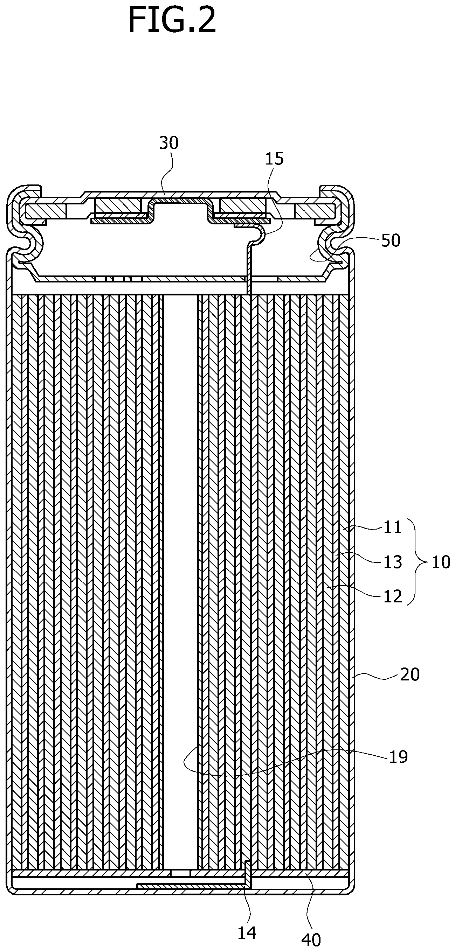

FIG. 1 is a perspective view schematically illustrating a battery cell according to an embodiment of the present disclosure; and FIG. 2 is a cross-sectional view schematically illustrating the battery cell according to an embodiment of the present disclosure. Referring to FIGS. 1 and 2, a battery cell 1 according to an embodiment of the present disclosure includes an electrode assembly 10, a case 20, a cap assembly 30, a lower insulating plate 40, and a gasket 50.

The electrode assembly 10 may include a first electrode plate 11 and a second electrode plate 12. The first electrode plate 11 may be any of a negative electrode plate and a positive electrode plate. In the present embodiment, description will be made based on an example in which the first electrode plate 11 is a positive electrode plate. The first electrode plate 11, which is the positive electrode plate, may be made of a thin metal plate with excellent conductivity, for example, an aluminum foil or a mesh. The first electrode plate 11 may include a positive electrode coating portion coated with a positive electrode active material and a positive electrode uncoated portion not coated with the positive electrode active material. For example, the positive electrode active material may include a chalcogenide compound or a complex metal oxide, such as LiCoO₂, LiMn₂O₄, LiNiO₂, or LiNiMnO₂.

The second electrode plate 12 may be the other of the negative electrode plate and the positive electrode plate. In the present embodiment, description will be made based on an example in which the second electrode plate 12 is the negative electrode plate. The second electrode plate 12, which is the negative electrode plate, may be made of a thin conductive metal plate, for example, copper, nickel foil, or a mesh. The second electrode plate 12 may include a negative electrode coating portion coated with a negative electrode active material and a negative electrode uncoated portion not coated with the negative electrode active material. For example, the negative electrode active material may include any of a carbon-based material, Si, Sn, tin oxide, tin alloy complex, transition metal oxide, lithium metal nitrite, metal oxide, and the like.

A separator 13 may be interposed between the first electrode plate 11 and the second electrode plate 12 to prevent or substantially prevent a short circuit between the first electrode plate 11 and the second electrode plate 12. For example, the separator 13 may be made of polyethylene, polypropylene, a porous copolymer of polyethylene and polypropylene, or the like.

In an embodiment, a negative electrode tab 14 is welded to a bottom surface of the case 20, and the case 20 may function as a negative electrode, and a positive electrode tab 15 may be welded to the cap assembly 30, and the cap assembly 30 may function as a positive electrode. In an embodiment, the positive electrode tab 15 may come into contact with the bottom surface of the case 20, and the case 20 may function as a positive electrode.

The electrode assembly 10 is embedded or accommodated in the case 20. The case 20 may have a cylindrical shape with an open upper side. During an assembly process of the secondary battery, the electrode assembly 10 and a center pin 19 may be inserted into the case 20 together with an electrolyte. The case 20 may be made of steel, stainless steel, aluminum, an aluminum alloy, or an equivalent thereof.

The cap assembly 30 may cover an open area of the case 20. The case 20 may have the cylindrical shape with the open upper side, and the cap assembly 30 may be disposed above the case 20 to seal an upper portion of the case 20. The upper portion of the case 20 may be in close contact with the cap assembly 30 through a processing process. The cap assembly 30 may include a vent electrically connected to the electrode assembly 10, a current breaker configured to be broken by an action of the vent to block a current path, and a cap plate functioning as an electrode terminal. The cap assembly 30 may protrude from or be recessed in the case 20 and may be modified in any of various shapes.

The lower insulating plate 40 may be disposed between a lower portion of the electrode assembly 10 and the case 20 to prevent or substantially prevent a short circuit. The lower insulating plate 40 may prevent or substantially prevent the electrode assembly 10 from being in electrical contact with the lower portion of the case 20. The negative electrode tab 14 may be connected to the bottom surface of the case 20 by passing through a hole formed in the lower insulating plate 40.

The gasket 50 may be disposed between an upper portion of the electrode assembly 10 and the cap assembly 30 to prevent or substantially prevent a short circuit and may be in close contact or at least partially contacting with the case 20 to prevent or substantially prevent an electrolyte leakage. The positive electrode tab 15 may be connected to the cap assembly 30 by passing through the gasket 50.

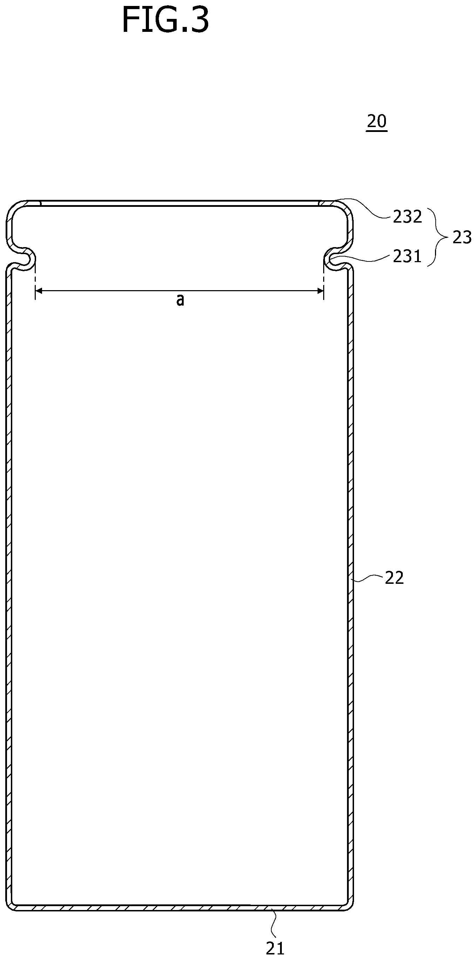

FIG. 3 is a cross-sectional view schematically illustrating a case according to an embodiment of the present disclosure. Referring to FIG. 3, the case 20 according to an embodiment of the present disclosure may include a bottom portion 21, a side portion 22, and a bending portion 23.

The side portion 22 may have a cylindrical shape and extend upward from the circular bottom portion 21. The bending portion 23 may fix the cap assembly 30 and the gasket 50 by bending an upper portion of the side portion 22. The negative electrode tab 14 may be connected to the bottom portion 21.

The bending portion 23 may include a beading portion 231 and a crimping portion 232. The beading portion 231 may be bent inward from the side portion 22 to support the cap assembly 30. The crimping portion 232 may restrain the cap assembly 30 by bending an upper end portion of the side portion 22 inward. The crimping portion 232 may be disposed above the beading portion 231.

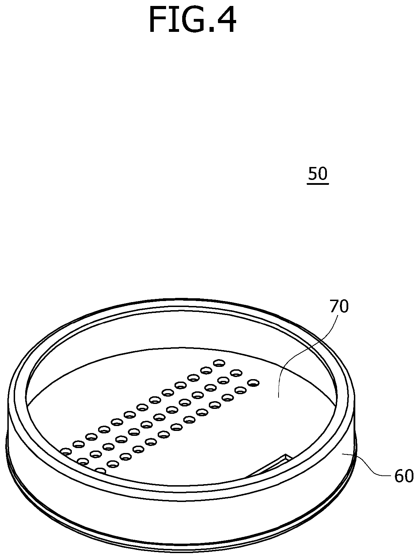

FIG. 4 is a perspective view schematically illustrating a gasket according to an embodiment of the present disclosure. Referring to FIG. 4, the gasket 50 according to an embodiment of the present disclosure may include an airtightness maintenance part 60 and an insulating part 70.

The airtightness maintenance part 60 may be in close contact or at least partially contacting with an inner circumferential surface of the upper portion of the case 20 to maintain airtightness. The airtightness maintenance part 60 may have a cylindrical shape and have an outer diameter corresponding to an inner diameter of the case 20.

The insulating part 70 may be coupled to the airtightness maintenance part 60 and disposed above the electrode assembly 10 to prevent or substantially prevent a short circuit. The insulating part 70 may allow the positive electrode tab 15 to pass therethrough to block a short circuit caused by contact between the electrode assembly 10 and the positive electrode tab 15. The insulating part 70 may be connected to a lower portion of the airtightness maintenance part 60. An additional conventional insulating plate can be omitted as the gasket including the insulating part 70 and the airtightness maintenance part 60 prevents or substantially prevents a short circuit while ensuring air tightness and leakage prevention.

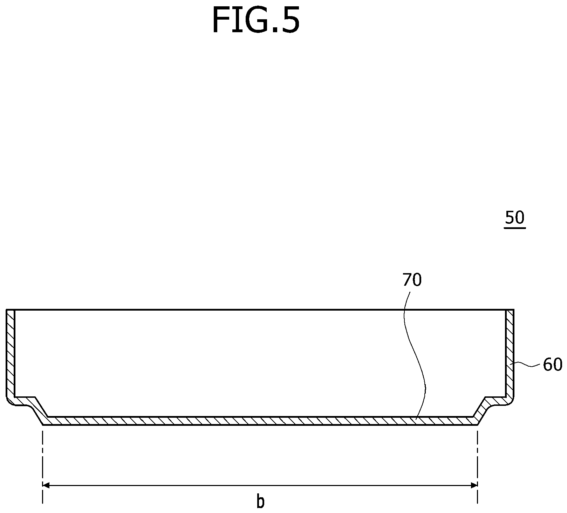

FIG. 5 is a cross-sectional view schematically illustrating a state in which an airtightness maintenance part and an insulator are formed integrally according to an embodiment of the present disclosure. In an embodiment, referring to FIG. 5, the airtightness maintenance part 60 and the insulating part 70 may be formed integrally. The airtightness maintenance part 60 and the insulating part 70 may be integrally formed using a same material.

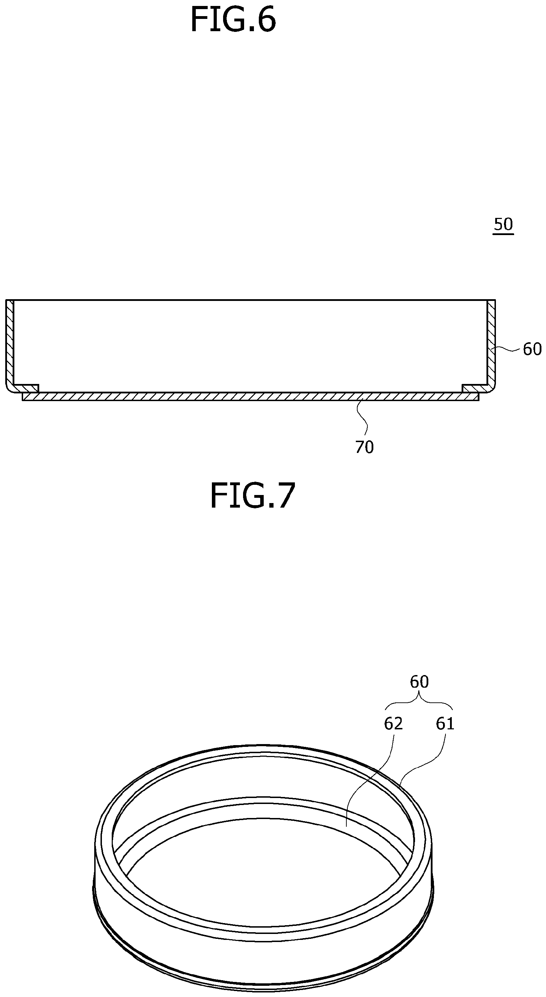

FIG. 6 is a cross-sectional view schematically illustrating a state in which the airtightness maintenance part and the insulator are bonded according to an embodiment of the present disclosure. Referring to FIG. 6, the airtightness maintenance part 60 and the insulating part 70 may be manufactured separately and then bonded. The airtightness maintenance part 60 may be made of a material capable of increasing adhesion to the case 20, and the insulating part 70 may be made of an insulating material. The insulating part 70 may be bonded to the lower portion or an inner circumferential surface of the airtightness maintenance part 60.

FIG. 7 is a view schematically illustrating the airtightness maintenance part according to an embodiment of the present disclosure. The airtightness maintenance part 60 according to an embodiment of the present disclosure may include an airtightness cylindrical portion 61 and an airtightness protruding portion 62.

The airtightness cylindrical portion 61 may have a cylindrical shape to be in close contact with an inner circumferential surface of the case 20. The airtightness cylindrical portion 61 may maintain a state of being in contact with an upper inner circumferential surface of the case 20 in which the bending portion 23 is formed.

The airtightness protruding portion 62 may protrude inward from an inner circumferential surface of the airtightness cylindrical portion 61. The airtightness protruding portion 62 may protrude inward from an inner side of the airtightness cylindrical portion 61 in a circumferential direction and may have an inner diameter smaller than an inner diameter of the airtightness cylindrical portion 61. The airtightness protruding portion 62 may have a flat or rounded cross-section.

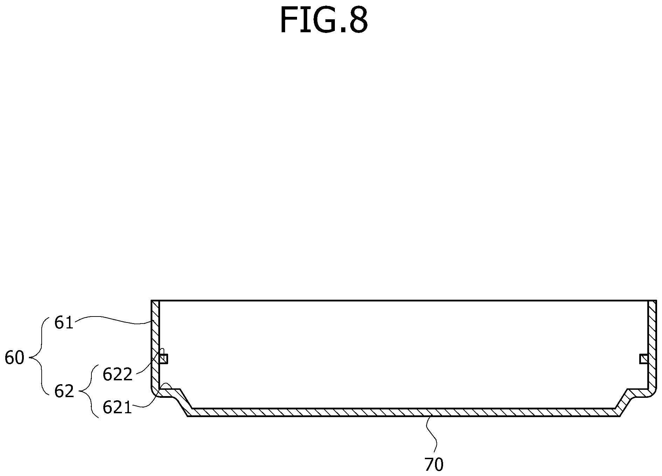

FIG. 8 is a cross-sectional view schematically illustrating an airtightness protruding part according to an embodiment of the present disclosure. Referring to FIG. 8, the airtightness protruding portion 62 according to an embodiment of the present disclosure may include a first protrusion 621.

The first protrusion 621 may be coupled to the insulating part 70 after protruding inward from a lower end portion of the airtightness cylindrical portion 61. The first protrusion 621 may have a flat cross-section to be connected to the insulating part 70.

The airtightness protruding portion 62 according to an embodiment of the present disclosure may further include a second protrusion 622. The second protrusion 622 may be disposed above the first protrusion 621 and may protrude inward from the airtightness cylindrical portion 61 to support the cap assembly 30. The second protrusion 622 may support a lower end portion of the cap assembly 30 inserted into the airtightness cylindrical portion 61. The second protrusion 622 may set an insertion height of the cap assembly 30.

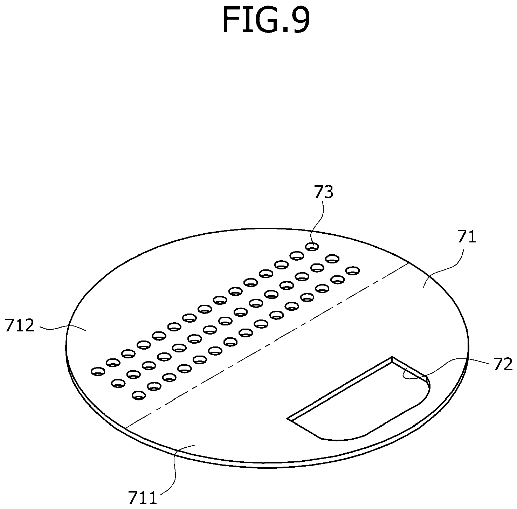

FIG. 9 is a view schematically illustrating the insulator according to an embodiment of the present disclosure. Referring to FIG. 9, the insulating part 70 according to an embodiment of the present disclosure may include an insulating plate 71 and an insulating through hole 72.

The insulating plate 71 may be connected to the airtightness maintenance part 60 to cover the upper portion of the electrode assembly 10. The insulating plate 71 may be formed integrally with the first protrusion 621. In an embodiment, the insulating plate 71 may be in contact with an upper or lower surface of the first protrusion 621 and bonded by an adhesive. The insulating plate 71 may have a disk shape. An outer diameter of the insulating plate 71 may be smaller than an outer diameter of the airtightness protruding portion 62 and greater than an inner diameter thereof. In an embodiment, the outer diameter of the insulating plate 71 may correspond to the inner diameter of the case 20.

The insulating through hole 72 may be formed in the insulating plate 71 and may allow the positive electrode tab 15 connecting the electrode assembly 10 to the cap assembly 30 to pass therethrough. The insulating through hole 72 may have any of various shapes to allow the positive electrode tab 15 to pass therethrough.

The insulating part 70 according to an embodiment of the present disclosure may further include an insulating discharge hole 73. The insulating discharge hole 73 may be formed in the insulating plate 71 to discharge a gas. A plurality of insulating discharge holes 73 may be formed as fine holes to discharge only the gas. In an embodiment, the insulating plate 71 may be virtually bisected and partitioned into a first semicircle 711 and a second semicircle 712, and the insulating through hole 72 may be formed in the first semicircle 711, and the plurality of insulating discharge holes 73 may be formed in the second semicircle 712. In an embodiment, plurality of insulating discharge holes 73 may be disposed in a row at predetermined distances from one another.

Referring to FIGS. 2, 3, and 5, the insulating part 70 may be disposed under the beading portion 231. In other words, the airtightness maintenance part 60 may be in close contact or at least partially contacting with the side portion 22, and the beading portion 231 may be formed through processing for the side portion 22, and, thus, the insulating part 70 formed on a lower end portion of the airtightness maintenance part 60 may be disposed under the beading portion 231. The insulating part 70 disposed below the beading portion 231 may cover the electrode assembly 10 to maintain an insulating state. In an embodiment, a diameter "b" of the insulating part 70 may be greater than an inner diameter "a" of the beading portion 231. The diameter "b" of the insulating part 70 may be greater than the inner diameter "a" of the beading portion 231, thereby blocking contact between the electrode assembly 10 disposed under the insulating part 70 and the beading portion 231. In an embodiment, the diameter "b" of the insulating part 70 may be the same as or greater than a diameter of the electrode assembly 10.

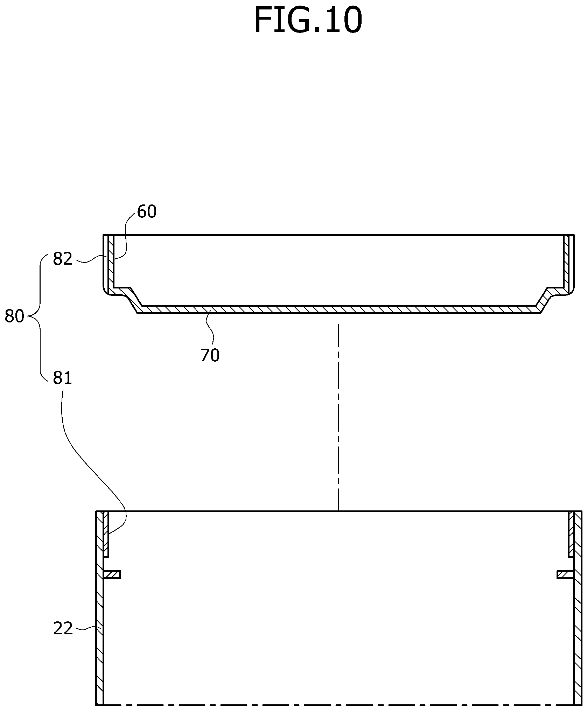

FIG. 10 is a cross-sectional view schematically illustrating a guide part according to an embodiment of the present disclosure. Referring to FIG. 10, the battery cell 1 according to an embodiment of the present disclosure may further include a guide part 80. The guide part 80 may correct a position of the gasket 50 inserted into the case 20. The insulating through hole 72 formed in the insulating plate 71 of the gasket 50, by the guide part 80, may be disposed at an installation position of the positive electrode tab 15.

The guide part 80 according to an embodiment of the present disclosure may include a guide protrusion 81 and a guide groove 82.

The guide protrusion 81 may protrude inward from the case 20. One or more guide protrusions 81 may be formed inside the side portion 22 of the case 20. The guide protrusion 81 may protrude in a vertical direction of the side portion 22. The guide protrusion 81 may be formed to have a vertical length corresponding to an insertion path of the gasket 50. In addition, the guide protrusion 81 may be formed to have a vertical length corresponding to a set length.

The guide groove 82 may be recessed outside the gasket 50 such that the guide protrusion 81 may be inserted therein. The guide groove 82 may be formed outside the airtightness cylindrical portion 61 to have a vertical length.

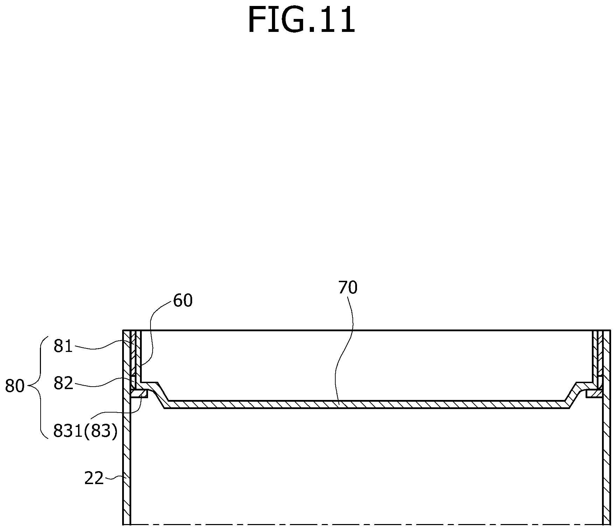

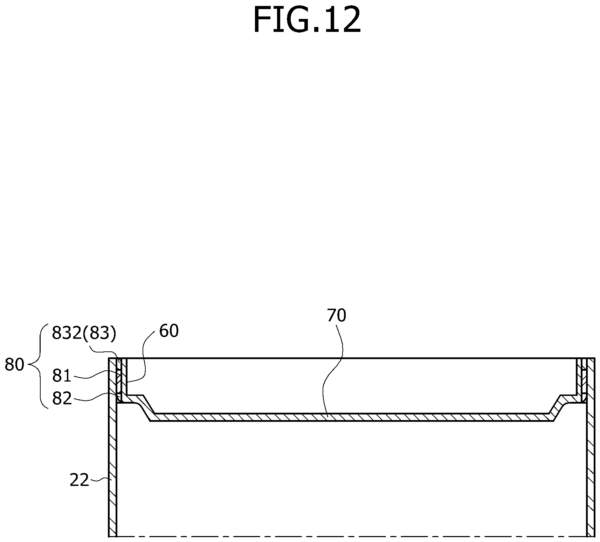

FIG. 11 is a cross-sectional view schematically illustrating a guide stopper according to an embodiment of the present disclosure; and FIG. 12 is a cross-sectional view schematically illustrating a guide stopper according to another embodiment of the present disclosure. Referring to FIGS. 11 and 12, the guide part 80 according to an embodiment of the present disclosure may further include a guide stopper 83. The guide stopper 83 may restrict an insertion depth of the gasket 50 inserted into the case 20.

In an embodiment of the guide stopper 83, a case stopper 831 may protrude inward from the case 20, may be disposed under the guide protrusion 81, and may support a lower portion of the gasket 50 to be inserted into the case 20. The case stopper 831 may protrude inward from the side portion 22, protrude in a circumferential direction along an inner circumferential surface of the side portion 22, and have a circular band-shaped cross section. In an embodiment, a plurality of case stoppers 831 may be disposed to be spaced apart from each other in a circumferential direction. In an embodiment, the case stopper 831 is provided, and the guide protrusion 81 may extend downward from the upper end portion of the side portion 22 to the case stopper 831. In addition, the guide protrusion 81 may be disposed at any of various position s of the side portion 22 to guide an insertion position of the gasket 50. The guide groove 82 may be formed from the upper end portion to the lower end portion of the airtightness cylindrical portion 61. The guide groove 82 may be inserted into the guide protrusion 81 to move the gasket 50 downward, and the insertion of the guide groove 82 may be finished when the gasket 50 reaches the guide stopper 83.

In another embodiment of the guide stopper 83, a gasket stopper 832 may be formed on the gasket 50, disposed above the guide groove 82, and supported by the guide protrusion 81. The gasket stopper 832 may be formed integrally with the airtightness cylindrical portion 61. In addition, the gasket stopper 832 may be fixedly inserted into an upper portion of the guide groove 82. When the gasket 50 moves down in a state in which the guide protrusion 81 is inserted into the guide groove 82, the guide protrusion 81 may move along the guide groove 82 and may be caught on the gasket stopper 832, thereby restricting the movement of the gasket 50. When the gasket stopper 832 is provided, the guide protrusion 81 may extend downward from the upper end portion of the side portion 22. In addition, the guide protrusion 81 may be disposed at any of various positions of the side portion 22 to guide the insertion position of the gasket 50. The guide groove 82 may be formed from the lower end portion of the airtightness cylindrical portion 61 to a set height. The guide groove 82 may be inserted into the guide protrusion 81 to move the gasket 50 down, and when the guide protrusion 81 is caught on the gasket stopper 832, the insertion of the gasket 50 may be finished.

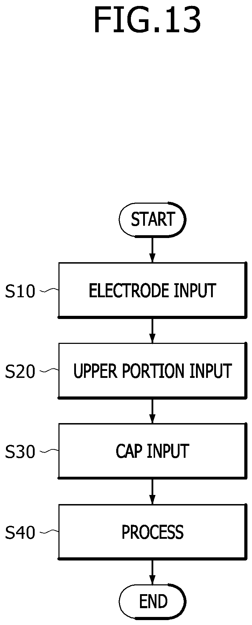

FIG. 13 is a flowchart schematically illustrating a method of manufacturing a battery cell according to an embodiment of the present disclosure. The method of manufacturing a battery cell according to an embodiment of the present disclosure will be described with reference to FIG. 13 as follows.

In an electrode input operation (S10), the electrode assembly 10 may be put into the case 20. In addition, an electrolyte may be put into the case 20. The lower insulating plate 40 may be disposed between the electrode assembly 10 and the bottom portion 21 of the case 20, and the negative electrode tab 14 may pass through the lower insulating plate 40 to connect the bottom portion 21 to the electrode assembly 10.

In an upper portion input operation (S20), the gasket 50 may be put into the case 20. The gasket 50 may include the airtightness maintenance part 60 in close contact or at least in partial contact with the side portion 22 of the case 20 and the insulating part 70 disposed above the electrode assembly 10 to prevent or substantially prevent a short circuit. The insertion position of the gasket 50 may be corrected by the guide part 80. A lower end portion of the positive electrode tab 15 may be connected to the electrode assembly 10, and the positive electrode tab 15 may pass through the gasket 50.

In a cap input operation (S30), the cap assembly 30 may be put into the case 20. A transfer robot may hold the cap assembly 30 and insert the cap assembly 30 into the upper open area of the case 20. The airtightness maintenance part 60 may be in close contact or at least in partial contact with the inner circumferential surface of the side portion 22, and the cap assembly 30 may be in close contact or at least in partial contact with an inner circumferential surface of the airtightness maintenance part 60. The insulating part 70 may be disposed between the cap assembly 30 and the electrode assembly 10, and the positive electrode tab 15 may pass through the insulating part 70 to connect the electrode assembly 10 to the cap assembly 30.

In a processing operation (S40), the opening of the case 20 may be sealed. The bending portion 23 may be formed by processing the upper portion of the case 20. The bending portion 23 can increase a coupling strength between the case 20 and the airtightness maintenance part 60 and maintain the coupled state of the case 20 and the cap assembly 30.

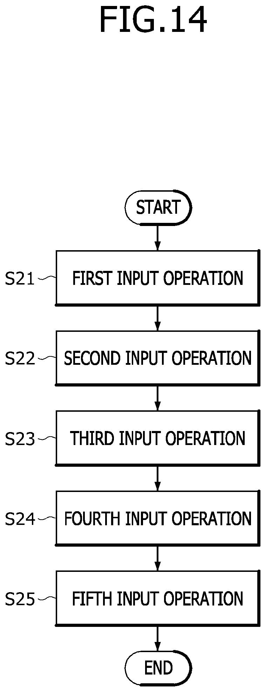

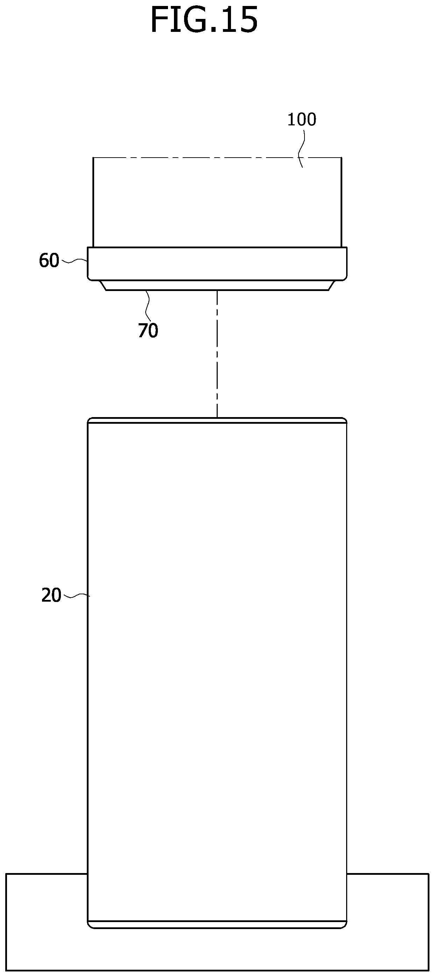

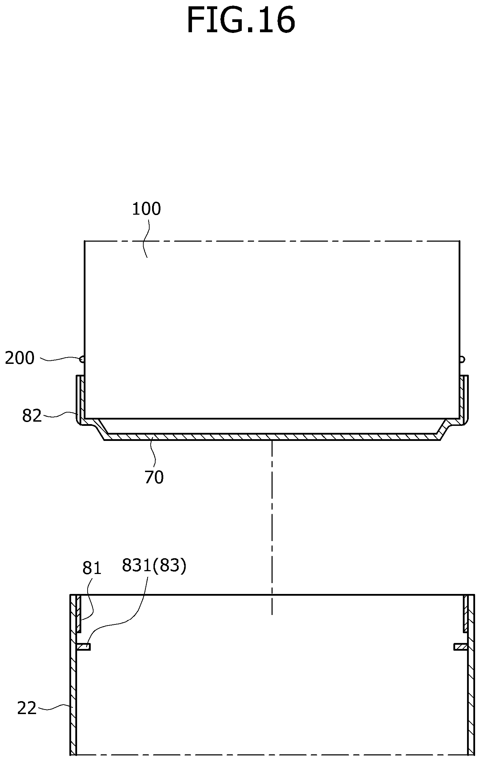

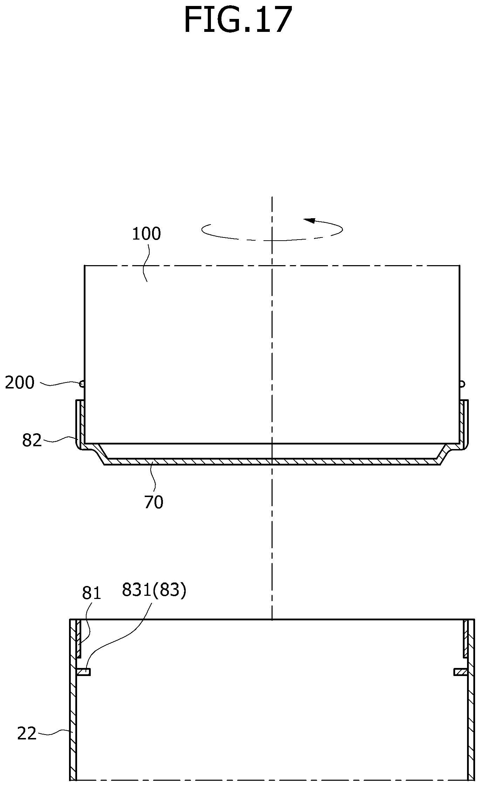

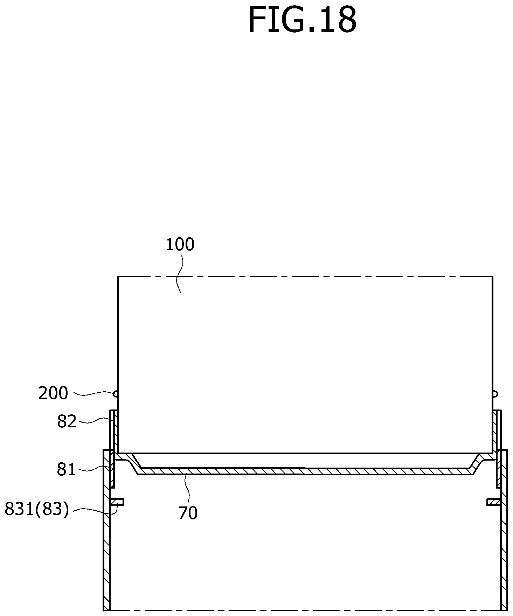

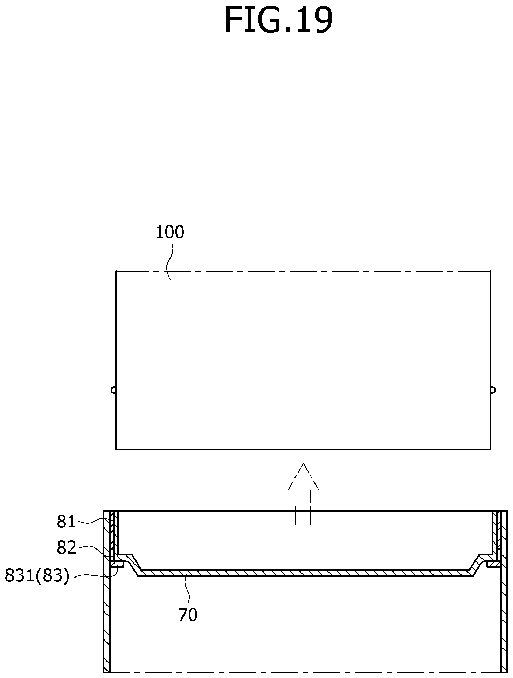

FIG. 14 is a flowchart schematically illustrating an upper portion input operation in FIG. 13; FIG. 15 is a view schematically illustrating a first input operation in FIG. 14; and FIG. 16 is a view schematically illustrating a second input operation in FIG. 14. FIG. 17 is a view schematically illustrating a third input operation in FIG. 14; FIG. 18 is a view schematically illustrating a fourth input operation in FIG. 14; and FIG. 19 is a view schematically illustrating a fifth input operation in FIG. 14. Referring to FIGS. 14 to 19, in the upper portion input operation (S20), the gasket 50 may be disposed between the upper portion of the electrode assembly 10 and the cap assembly 30 to prevent or substantially prevent a short circuit, and the gasket 50 is in close contact or at least in partial contact with the case 20 to prevent or substantially prevent an electrolyte leakage. The upper portion input operation (S20) may include a first input operation (S21), a second input operation (S22), a third input operation (S23), a fourth input operation (S24), and a fifth input operation (S25).

In the first input operation (S21), a transfer unit 100 may hold the gasket 50 to be disposed above the case 20. The transfer unit 100 may hold a plurality of gaskets 50 at the same time to be positioned above the case 20 disposed in a row. The transfer unit 100 may be in close contact with the inside of the airtightness maintenance part 60 or may hold an upper end portion of the airtightness maintenance part 60 (see FIG. 15).

In the second input operation (S22), a detection unit 200 may detect the guide protrusion 81 formed on the case 20. The detection unit 200 may detect a position of the guide protrusion 81 protruding from a side surface of the transfer unit 100 and protruding inward from the case 20 disposed thereunder (see FIG. 16).

In the third input operation (S23), the transfer unit 100 may correct a position of the gasket 50 such that the guide groove 82 formed in the gasket 50 and the guide protrusion 81 are positioned collinearly. The transfer unit 100 may move horizontally and change the position of the gasket 50 while rotating in an axial direction. By adjusting the position of the transfer unit 100, the guide groove 82 may be disposed collinearly with the guide protrusion 81 (see FIG. 17).

In the fourth input operation (S24), the transfer unit 100 may put the gasket 50 into the case 20 such that the guide protrusion 81 is inserted into the guide groove 82. The transfer unit 100 may increase in length or move down to insert the gasket 50 into the case 20 (see FIG. 18).

In the fifth input operation (S25), when the downward movement of the gasket 50 is restricted by the guide stopper 83, the transfer unit 100 may return to an original position thereof with the separation of the gasket 50 (see FIG. 19). FIG. 19 is a view illustrating the case stopper 831, and, even when the movement of the gasket 50 is restricted by the gasket stopper 832, the transfer unit 100 may be separated from the gasket 50 (see FIG. 12).

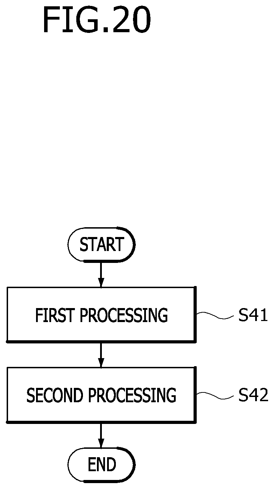

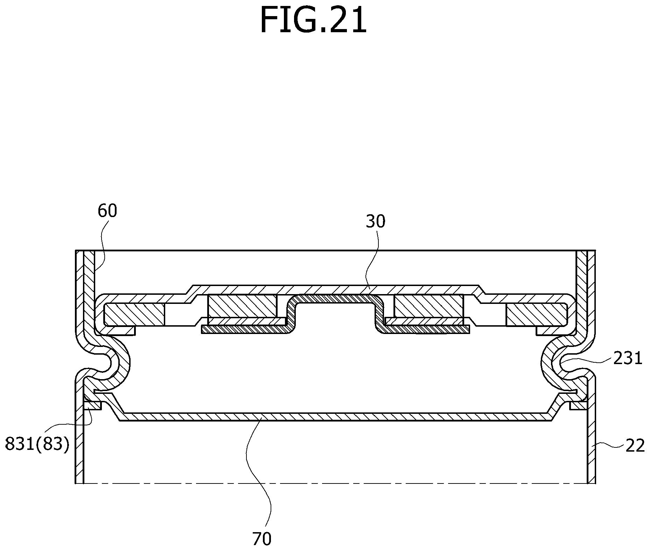

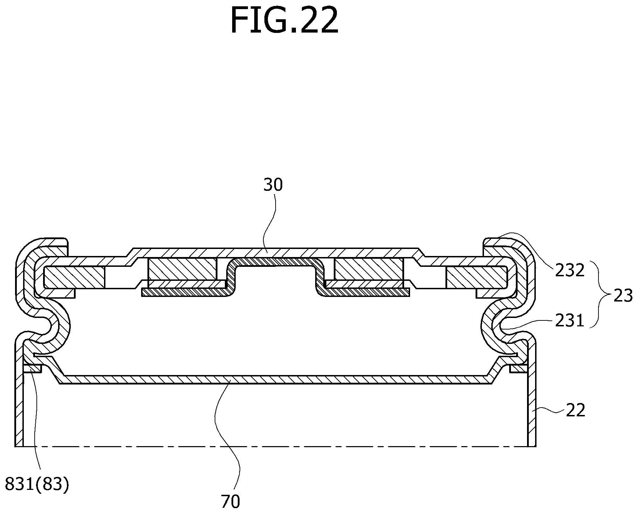

FIG. 20 is a flowchart schematically illustrating a processing operation in FIG. 13; FIG. 21 is a view schematically illustrating a first processing operation in FIG. 20; and FIG. 22 is a view schematically illustrating a second processing operation in FIG. 20. Referring to FIGS. 20 to 22, the processing operation (S40) may include a first processing operation (S41) and a second processing operation (S42).

In the first processing operation (S41), the beading portion 231 bent inward from the case 20 and the gasket 50 to support the cap assembly 30 may be formed (see FIG. 21). When the cap assembly 30 is seated on the second protrusion 622, the airtightness cylindrical portion 61 formed between the first protrusion 621 and the second protrusion 622 and the side portion 22 in contact with the airtightness cylindrical portion 61 may be processed inward to form the beading portion 231 (see FIG. 8).

In the second processing operation (S42), the crimping portion 232 for restricting the cap assembly 30 by bending the upper end portions of the case 20 and the gasket 50 inward may be formed (see FIG. 22). The crimping portion 232 may cover the upper edge of the cap assembly 30 by the bent upper end portion of the side portion 22. The cap assembly 30 disposed between the beading portion 231 and the crimping portion 232 may maintain a fixed state.

While the present disclosure has been described with reference to some embodiments shown in the drawings, these embodiments are merely illustrative and it is to be understood that various modifications and equivalent other embodiments can be derived by those skilled in the art on the basis of the embodiments.

Therefore, the technical scope of the present disclosure should be defined by the appended claims.

## Claims

1. A battery cell (1) comprising:
an electrode assembly (10) including a first electrode plate (11) and a second electrode plate (12);
a case (20) in which the electrode assembly (10) is accommodated;
a cap assembly (30) covering an open area of the case (20); and
a gasket (50) located between an upper portion of the electrode assembly (10) and the cap assembly (30) and located to at least partially contact with the case (20).

2. The battery cell (1) as claimed in claim 1, wherein the case (20) comprises:
a bottom portion (21) having a circular shape;
a side portion (22) extending upward from the bottom portion (21); and
a bending portion (23) bent from the side portion (22) to fix the gasket (50) and the cap assembly (30).

3. The battery cell (1) as claimed in claim 2, wherein the bending portion (23) comprises:
a beading portion (231) bent inward from the side portion (22) to support the cap assembly (30); and
a crimping portion (232) bending inward from an upper end portion of the side portion (22) to restrict the cap assembly (30).

4. The battery cell (1) as claimed in any of the preceding claims 1 to 3, wherein the gasket (50) comprises:
an airtightness maintenance part (60) at least partially contact with an inner circumferential surface of an upper portion of the case (20) to maintain airtightness; and
an insulating part (70) coupled to the airtightness maintenance part (60) and located above the electrode assembly (10).

5. The battery cell (1) as claimed in claim 4, wherein the airtightness maintenance part (60) and the insulating part (70) are integrally formed.

6. The battery cell (1) as claimed in claim 4, wherein the airtightness maintenance part (60) and the insulating part (70) are bonded.

7. The battery cell (1) as claimed in any of the preceding claims 4 to 6, wherein the insulating part (70) is located under the beading portion (231).

8. The battery cell (1) as claimed in any of the preceding claims 4 to 7, wherein a diameter of the insulating part (70) is greater than an inner diameter of the beading portion (231).

9. The battery cell (1) as claimed in any of the preceding claims 4 to 8, wherein the airtightness maintenance part (60) comprises:
an airtightness cylindrical portion (61) having a cylindrical shape at least partially in contact with an inner circumferential surface of the case (20); and
an airtightness protruding portion (62) protruding to an inner circumferential surface of the airtightness cylindrical portion (61).

10. The battery cell (1) as claimed in claim 9, wherein the airtightness protruding portion (62) comprises a first protrusion (621) protruding inward from a lower end portion of the airtightness cylindrical portion (61) and coupled to the insulating part (70).

11. The battery cell (1) as claimed in claim 10, wherein the airtightness protruding portion (62) further comprises a second protrusion (622) located above the first protrusion (621), protruding inward from the airtightness cylindrical portion (61) and supporting the cap assembly (30).

12. The battery cell (1) as claimed in any of the preceding claims 4 to 11, wherein the insulating part (70) comprises:
an insulating plate (71) connected to the airtightness maintenance part (60) and covering the upper portion of the electrode assembly (10); and
an insulating through hole (72) formed in the insulating plate (71),
wherein a positive electrode tab (15) connecting the electrode assembly (10) to the cap assembly (30) passes through the insulating through hole (72).

13. The battery cell (1) as claimed in claim 12, wherein the insulating part (70) further comprises an insulating discharge hole (73) formed in the insulating plate (71) for discharging a gas.

14. The battery cell (1) as claimed in any of the preceding claims 1 to 13, further comprising a guide part (80) configured to correct a position of the gasket (50) inserted into the case (20), wherein the guide part (80) comprises:
a guide protrusion (81) protruding inward from the case (20); and
a guide groove (82) recessed outside the gasket (50) and in which the guide protrusion (81) is inserted.

15. A method of manufacturing a battery cell (1), the method comprising:
putting an electrode assembly (10) into a case (20);
putting a gasket (50) into the case (20);
putting a cap assembly (30) into the case (20); and
sealing an opening of the case (20),
wherein, in the putting the gasket (50) into the case (20), the gasket (50) is arranged between an upper portion of the electrode assembly (10) and the cap assembly (30), and the gasket (50) is located to at least partially contact the case (20).
